# EUROPEAN PATENT APPLICATION

(11) **EP 3 540 310 A1**
(43) Date of publication of application: **18.09.2019**
(21) Application number: 18161261.5
(22) Date of filing: 12.03.2018
(51) Int. Cl.: F23D 14/20, F23D 14/28, F23C 99/00, F28D 20/00, F28D 17/02

(54) **A method for heat transport and regulation**

(71) Applicant: H.J.Th.M. Taris Beheer B.V., 9956 PH Den Andel (NL)
(72) Inventor: TARIS, Hermanus Johannus Theodorus Maria, 9956 PH Den Andel (NL); CALVINO BETHENCOURT, Daniel Rogelio, 15000 Lagomar (UY)
(74) Representative: Plaggenborg, Menko Bernard

(57) **Abstract**

The invention relates to a method for transferring heat energy from a first medium to a final medium, comprising the step of heating an intermediate medium (3) by contacting said intermediate medium with the first medium, and is characterized in that the intermediate medium comprises solid magnesium oxide, the method comprising a first step of contacting said magnesium oxide with combustion gases of hydrogen as the first medium and a second step of contacting said heated magnesium oxide with said final medium.

## Description

The present invention relates to a method for transporting and regulating heat energy according to the preamble of claim 1. The invention also relates to a device for implementing this method.

It is known in the art to transport heat energy, usually referred to as "heat", so as to heat cold areas. Also, such methods are used for directing large amounts of heat energy to specific areas, for example when drying hair or for raising and breeding animals, as an example. It is also known to transport heat from one medium to another medium, for example in domestic heating radiators for heating up air in a room by circulating warm water in a heating system.

Such known methods provide disadvantages in that large amounts of heat are lost and in that heat is transferred batchwise with the consequence that at some moments too much heat is transferred whereas at other moments no heat is transferred at all.

The invention aims at providing an improved method of the kind mentioned in the preamble.

The invention in particular aims at providing a method that allows to transfer heat energy in a regulated amount wherein heat energy is made batchwise but transferred to a desired place at a substantially continuous temperature.

So as to obtain at least one of the above mentioned aims, the invention provides a method as mentioned in claim 1. This method has the advantage that heat energy is transferred substantially continuously.

It has also shown that the method according to the present invention has the advantage that the heat transfer is obtained at a high yield with almost no loss. Also, the present invention provides the advantage that high amounts of heat can be transferred to an intermediate medium in a very short time and subsequently subtracted therefrom slowly. Hence, after heating up the intermediate medium, its heat energy can be transferred to the medium to be heated, hereinafter referred to as final medium, slowly so as to yield a limited loss of heat energy at the intermediate medium and a gradual and gentle heating of the final medium. These synergistic effects are surprising and advantageous.

A very surprising effect of the present invention can be found in the efficiency of the process for making heat. An HHO generator working at 360 Watt produces about 2 liter HHO gas per minute. The heat produced by burning said HHO and mixing same with ambient air yields a gas stream with a temperature comparable to a hair dryer working at 1850 Watt. This is even more remarkable when considering the fact that both devices are plugged in a same power source. In a process of heating solid magnesium oxide using said combustion gas and at the same time mixing the combustion gas with ambient air, a heated airflow is obtained that can be controlled so as to have a same temperature as airflow from a regular hair dryer. Combustion and heating of the solid magnesium oxide may take place intermittently, such that said heated airflow is obtained even in absence of combustion. Addition of ambient airflow may be controlled so as to have a constant air temperature, due to the solid magnesium oxide along which ambient air is forced after turning off the HHO generator and in absence of combustion.

The invention therefore relates to a method for transferring heat energy from a first medium to a final medium, comprising the step of heating an intermediate medium by contacting said intermediate medium with the first medium, characterized in that the intermediate medium comprises solid magnesium oxide, the method comprising a first step of contacting said magnesium oxide with combustion gases of hydrogen as the first medium and a second step of contacting said heated magnesium oxide with said final medium. This method according to the invention provides at least part of the advantages and goals as indicated above.

Preferably, the method is performed using HHO, also commonly known as Brown's gas or oxyhydrogen, i.e. a stoichiometric mixture of hydrogen (H2) gas and oxygen (02) gas, as source of hydrogen. By igniting HHO a hot flame is obtained, yielding H2O as single combustion gas. The first medium that is obtained in the method and that will be dispersed only contains water. Thus, the present method can easily and without any harm be used for heating purposes in environments inhabiting people or animals. Especially isolated areas can be heated efficiently, like space capsules, but the method is also applicable in hospitals for cleaning and disinfecting air. No oxygen from the environment will be used for combustion purposes when using HHO gas. The present invention therefore preferably relates to a method wherein a stoichiometric mixture of hydrogen gas and oxygen gas is combusted yielding the combustion gas comprising water as the first medium.

According to a preferred embodiment of the method, the magnesium oxide is placed in a container, said container comprising an inlet for feeding said combustion gases into said container and an exit for removing said combustion gases from said container. The container provides the advantage that the intermediate medium, and as a consequence the heat to be stored therein, is retained in a confined space, such that little energy is lost and energy can be effectively transferred from the intermediate medium to the final medium.

A further preferred embodiment is comprised of the method wherein the magnesium oxide is placed in a container, said container comprising an inlet for feeding said final medium into said container and an exit for removing said final medium from said container. Such embodiment allows for performing a continuous method, substantially without any interruption.

It is preferred in the method according to the invention that the container is at least partially made of graphite. Especially the part near its entrance, where the combustion gases enter the container and may contact the container, could be made of graphite. The advantage of graphite is its high decomposition or melting temperature, which is above 2500 °C, being the temperature of a hydrogen flame. Hence, the use of graphite allows one to direct the combustion gases of the hydrogen combustion or its flame, directly into the container comprising the intermediate medium.

A further decrease of energy loss is obtained when the container is at least partially thermally insulated at its outside. The heat insulating material may be a material that is able to withstand a temperature of at least 750 °C or even at least 1000 °C, preferably at least 1700 °C, more preferably at least 2200 °C, for example stone mineral wool, asbestos or the like. A thermal insulation may be comprised of a double walled container, preferably with a low pressure or substantially vacuum chamber in between said double walls.

The method according to the present invention may be used for many applications. For example, the second medium may be used as heater for human residential areas, like a living area, an office, a factory and the like. It may also be used for heating areas for animals, like a stable, a shed, or the like. The second medium may be air, allowing for a direct heating ensuring little energy loss. Hence, according to such embodiment, the step of heating the intermediate medium and the step of heating the final medium are performed in consecutive steps.

According to another alternative embodiment, the step of heating the intermediate medium and the step of heating the final medium may be performed at least partially simultaneously. In such embodiment, said final medium and said first medium are contacted simultaneously with the intermediate medium in at least part of the method, and subsequently into any of a living area, an office, a factory, a stable, a shed, or the like.

An especially preferred method comprises the step of transferring part of the heat energy stored in the intermediate medium to the final medium, so as to ensure a substantially constant temperature of the intermediate medium and thus of the final medium. For example, the method is embodied such that it comprises in the second step contacting the final medium with the intermediate medium is stopped when maximally 50% of the heat energy transferred by the first medium to the intermediate medium in a preceding first step, has been transferred to the final medium, after which the intermediate medium is contacted with the first medium for heating said intermediate medium. Preferably, the heat energy transferred from the intermediate medium to the final medium is maximally 40% or even maximally 30%. Such method is performed preferably in a batch method performing substantially consecutive first steps and second steps.

According to a further preferred embodiment, in the first step of the method according to the present invention, the intermediate medium is heated to a first temperature and wherein in the second step contacting the final medium with the intermediate medium is stopped when the temperature of the intermediate medium has dropped at least 20 °C and maximally 1000 °C due to transfer of heat energy from the intermediate medium to the final medium, after which the intermediate medium is contacted with the first medium for heating said intermediate medium to the first temperature. Hence, the method can be performed as a semi-batch method. Such yields high energetic and convenience advantages.

It is preferred, especially when the final medium is used directly for heating residential areas or areas for housing animal, that the temperature of the final medium is at constant at possible. To that end, in the method according to the invention, the flow rate of the final medium in the second step is controlled so as to obtain a flow of final medium exiting said intermediate medium with a substantially constant temperature. Also, when using the final medium as air for drying hair, a constant temperature is of great importance.

As a consequence, it is preferred that the temperature of the final medium is in the range of from 20 °C to 90 °C.

An especially preferred method is performed when the container is tube shaped with a length to diameter ratio of 1:3 to 1:10, preferably 1:4 to 1:6. Such ratio has shown to be very efficient. A single flame is easily capable of heating the intermediate medium inside the container fast, whereas the heat is equally fast transferred to the final medium.

An efficient method is furthermore obtained when the hydrogen is manufactured by an electrolyzing device and wherein the combustion gas of hydrogen and oxygen is fed as the first medium.

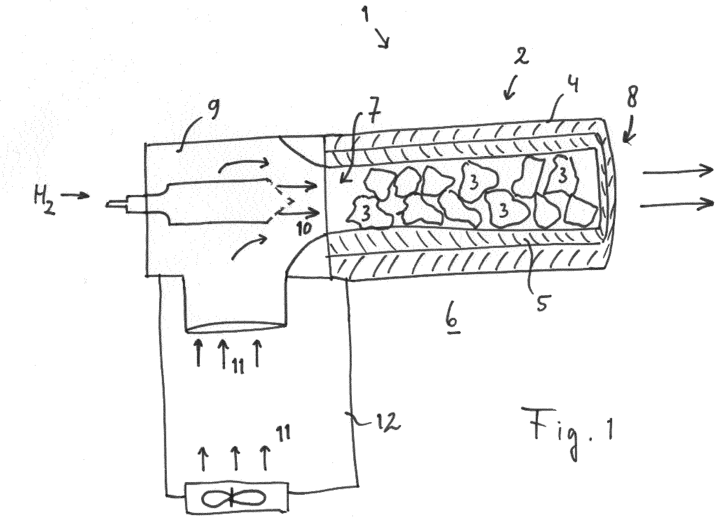

Fig. 1 shows an exemplary embodiment of a device for performing the method according to the present invention.

The device 1 as shown in Fig. 1 comprises a housing 2 containing solid pieces 3 of MgO. The housing 2 has a substantially cylindrical shape. It has an outer wall 4 and an inner lining 5. The housing 2 is structured so as to provide a thermal insulation to the environment 6. In the embodiment shown, the inner lining 5 is made of graphite, which easily withstands temperatures yielded by an HHO flame. The outer wall 4 is made of a thermally insulating material or may be made of a common material, for example metal, whereas an insulating material is provided between the outer wall 4 and the inner lining 5.

The pieces 3 of solid MgO are contained in the housing and at least partially contact the inner lining 5.

The housing 2 has an entrance side 7 and an exit side 8. The exit 8 may be connected to a piping so as to guide fluid from the device 1 to a desired position. In the embodiment shown, the entrance 7 is directly connected to a burner chamber 9. Here, H2 is oxidized to H2O, yielding a high temperature gas stream 10 of combustion gasses. Concurrently when feeding the gas stream 10 into the housing 2, air 11 may be added through a feeding chamber 12 into the burner chamber 9 and into the housing 2. As a consequence, the temperature of the fluid stream entering the housing is lower than the temperature of the combustion gasses 10. The feeding chamber 12 may be provided with a fan to control the amount of fluid entering the housing 2 and thus to control the temperature entering the housing 2.

Preferably, the fan is controllable, either automatically or manually.

The H2 fed into the burner chamber is also controlled. H2 is combusted only when the solid pieces of MgO need to be heated.

Fr example, H2 is combusted in the burner chamber 9 for heating the solid pieces of MgO.

According to a preferred embodiment, in a first step the solid pieces of MgO are heated by burning H2 in the burner chamber 9. The solid pieces of MgO may reach a temperature close to or at the temperature of the combustion gasses. When the solid pieces of MgO are heated sufficiently, addition and combustion of H2 is stopped. Then, fluid from the surrounding, for example air, is fed into the housing, contacting the solid pieces of MgO, thus heating the fluid. The heated fluid is removed from the housing at exit 8 and transported to a desired position.

A very effective application of the present invention can be found in boilers, especially industrial boilers. For example, locomotives may be provided with a device according to the present invention. Heating is performed very efficiently due to the direct contact of the combustion gasses with the solid pieces of MgO and the high yield of energy when heating the final medium.

Moreover, the method can be easily adapted for heating the solid pieces of MgO in a first step wherein the solid pieces of MgO are in a gaseous atmosphere, whereas after the solid pieces of MgO have been heated, a liquid fluid is contacted with the stones for direct heating of the liquid.

Optionally, fluid from the surrounding may be added concurrently with the addition of H2 combustion gasses.

The invention is not limited to the embodiments as mentioned above. The invention is limited by the claims only.

The invention also relates to all combinations of features described here independently of each other.

## Claims

1. A method for transferring heat energy from a first medium to a final medium, comprising the step of heating an intermediate medium by contacting said intermediate medium with the first medium, **characterized in that** the intermediate medium comprises solid magnesium oxide, the method comprising a first step of contacting said magnesium oxide with combustion gases of hydrogen as the first medium and a second step of contacting said heated magnesium oxide with said final medium.

2. A method according to claim 1, wherein the magnesium oxide is placed in a container, said container comprising an inlet for feeding said combustion gases into said container and an exit for removing said combustion gases from said container.

3. A method according to claim 1, wherein the magnesium oxide is placed in a container, said container comprising an inlet for feeding said final medium into said container and an exit for removing said final medium from said container.

4. A method according to claim 2 or 3, wherein the container is at least partially made of graphite.

5. A method according to any of claims 2 to 4, wherein the container is at least partially thermally insulated at its outside.

6. A method according to claim 1, wherein said final medium is used for heating a living area, an office, a factory, a stable, a shed, or the like.

7. A method according to claim 1, wherein said final medium and said first medium are contacted simultaneously with the intermediate medium in at least part of the method, and subsequently said first and final medium are introduced into any one or more of a living area, an office, a factory, a stable, a shed, or the like.

8. A method according to any of the preceding claims, wherein in the second step contacting the final medium with the intermediate medium is stopped when at least 50% of the heat energy transferred by the first medium to the intermediate medium in a preceding first step, has been transferred to the final medium, after which the intermediate medium is contacted with the first medium for heating said intermediate medium.

9. A method according to any of the preceding claims, wherein in the first step the intermediate medium is heated to a first temperature and wherein in the second step contacting the final medium with the intermediate medium is stopped when the temperature of the intermediate medium has dropped at least 20 °C and maximally 1000 °C due to transfer of heat energy from the intermediate medium to the final medium, after which the intermediate medium is contacted with the first medium for heating said intermediate medium to the first temperature.

10. A method according to any of the preceding claims, wherein the flow rate of the final medium in the second step is controlled so as to obtain a flow of final medium exiting said intermediate medium with a substantially constant temperature.

11. A method according to claim 10, wherein the temperature of the final medium is in the range of from 20 °C to 90 °C.

12. A method according to any of claims 2 to 11, wherein the container is tube shaped with a length to diameter ratio of 1:3 to 1:10, preferably 1:4 to 1:6.

13. A method according to any of the preceding claims, wherein a stoichiometric mixture of hydrogen gas and oxygen gas is combusted yielding the combustion gas comprising water as the first medium.

14. A method according to any of the preceding claims, wherein the hydrogen is manufactured by an electrolyzing device yielding a stoichiometric mixture of hydrogen gas and oxygen gas and wherein the combustion gas of hydrogen and oxygen is fed as the first medium.
